# EUROPEAN PATENT APPLICATION

(11) **EP 4 145 033 A1**
(43) Date of publication of application: **08.03.2023**
(21) Application number: 22193603.2
(22) Date of filing: 02.09.2022
(51) Int. Cl.: F16L 47/12

(54) **A TUBULAR ASSEMBLY, COMPONENTS FOR FORMING A TUBULAR ASSEMBLY, AND METHOD OF FORMING THE COMPONENTS**

(30) Priority: 07.09.2021 NL 2029143
(71) Applicant: Pipelife Nederland B.V., 1601 MA Enkhuizen (NL)
(72) Inventor: Ploeg, Mark, 1674 PX Opperdoes (NL); Kruijer, Martinus Petrus, 1705 TP Heerhugowaard (NL); Schaaper, Pim, 1689 CS Zwaag (NL)
(74) Representative: Nederlandsch Octrooibureau

(57) **Abstract**

A tubular assembly is provided for protecting cables underground. The tubular assembly comprises a first pipe and second pipe, each having an outer end portion. The outer end portions of the first and second pipe at least partially overlap along the longitudinal direction to form a continuous tubular body with a smooth inner circumferential wall having a substantially consistent inner diameter throughout. The pipes are secured together by a coupler. The invention further relates to a pipe configured to be used in the tubular assembly, and a coupler configured to connect the pipe to another pipe to form such a tubular assembly. Furthermore, the invention relates to methods of forming the pipes and the coupler.

## Description

### Technical Field

The invention relates to a tubular assembly for protecting cables underground, in particular power cables. The invention further relates to a pipe configured to be used in the tubular assembly, and a coupler configured to connect the pipe to another pipe to form such a tubular assembly. Furthermore, the invention relates to methods of forming the pipes and the coupler.

### Background Art

Pipes and/or tubes are commonly used in various fields, including pipes for protecting cables underground such as power cables. Trenching and ploughing construction methods can be used to install such underground pipes and utilities within. As part of the installation process, two or more pipes are provided and connected to each other to form a single, longer pipe. There are various conventional techniques to connect the two pipes, including gluing or welding together the ends of the pipes. For the connection of pipes for protecting cables underground, typically a butt welding method is used for the connection.

For example, patent document AU2013205560B2 discloses a method wherein pipe segments are transported to an installation site by truck and welded in situ to form a pipe. Disadvantageous to an in situ welding method is that it is relatively time consuming. The speed with which the pipe can be laid is dependent on the speed with which the pipe can be welded. It is therefore desired to reduce the time required to connect pipe segments.

### Summary of Invention

Therefore, according to a first aspect of the invention, there is provided a tubular assembly for protecting cables underground, the tubular assembly comprising: a first pipe having an outer end portion and defining a longitudinal direction along the main axis of the pipe; a second pipe having an outer end portion, wherein the outer end portion of the first pipe and the outer end portion of the second pipe at least partially overlap along the longitudinal direction to form a continuous tubular body with a smooth inner circumferential wall having a substantially consistent inner diameter throughout; the assembly further comprising a coupler provided to secure the first and second pipe together.

Here the term "substantially consistent" is used to indicate an inner diameter of the tubular body that only varies to a limited extend along the longitudinal direction, e.g., over less than 1% of the diameter of the tubular body, preferably less than 0.1% of the diameter of the tubular body. A substantially consistent inner diameter is particularly useful when cables or other things must be pulled through pipes, eliminating edges that could snag or damage the cables during the pull-through.

Advantageous to the tubular assembly is that little time is required to establish a coupling between the first and second pipe. In comparison to pipes that are connected to each other through a conventional butt welding process, the installation process is significantly simplified and installation time is reduced. In embodiments, the tubular assembly may comprise at least 20 pipes, or at least 50 pipes, each coupled to other pipes using a coupler according to the invention. It will be understood that especially for such a tubular assembly of considerable length, installation time may be significantly shortened.

In an embodiment, the outer end portions of the first and second pipe are substantially complementary in shape to each other. Here the term "substantially complementary in shape" refers to shapes that are configured to mate with each other along one or more surfaces, but may provide space for features such as a seal ring or part of the coupler in between the one or more mating surfaces. In an embodiment, the outer end portions of the first and second pipe may each have a wall end surface, wherein the respective wall end surfaces are substantially complementary in shape to each other. The substantially complementary shape of the outer portions enables the pipes to be connected easily and without risking significant leakage into and from the pipe.

In an embodiment, an annular chamber is provided between the overlapping outer end portions. The annular chamber can for instance provide a space for one or more seals, such as o-ring seals, to seal the connection between the pipes. In embodiments, more than one annular chamber may be provided.

In an embodiment, the connection between the first pipe and the second pipe is waterproof. In tubular assemblies for underground cables, water or other liquids may be provided within the tubular assembly for cooling purposes. The term "waterproof is to be interpreted as sufficiently waterproof to prevent water or other liquids from leaking out of the tubular assembly and/or to prevent dirt and contamination from entering.

In an embodiment, the assembly comprises a seal. The seal prevents dirt from entering into the tubular assembly and/or prevents water or any other liquid or cooling material that may be within the tubular assembly from leaking out. Optionally, the seal is arranged in the annular chamber between the overlapping outer end portions of the first and second pipe.

In an embodiment, the outer diameter of the first pipe and/or the second pipe is increased with respect to the average outer diameter of the first and/or the second pipe respectively. The increased outer diameter ensures that the outer end portions of the pipe have sufficient strength and stiffness. The average outer diameter is defined as a consistent outer diameter at a cross-section sufficiently far away from the pipe's outer end.

In a further embodiment, the outer diameter of the first and/or second pipe is increased with a value equal to or less than the average wall thickness of the first and/or the second pipe respectively. This provides the tubular assembly with a relatively slender profile that can have sufficient strength and stiffness, and does not require much more space during transport of the individual pipes. In addition, such a relatively slender profile is advantageous when the assembly is to be deployed using a cable plough method.

In an embodiment, the tubular assembly has a substantially smooth outer circumferential surface. A smooth outer circumferential surface without obstacles extending from the tubular assembly makes the assembly less prone to damage, and can be easier to transport and position in place.

In an embodiment, the coupler is configured to extend circumferentially along an outer circumferential surface of the first and second pipes. The coupler thereby prevents movement of the first pipe with respect to the second pipe along a direction extending radially. Further advantageous to such a connection is that the pipes can be decoupled easily by removing the coupler. This allows for the efficient reuse and/or recycling of the components.

In an embodiment, the tubular assembly comprises an interlocking mechanism that prevents movement of the first and second pipes with respect to each other along the longitudinal direction. The interlocking mechanism provides tensile strength to the coupling between the two pipes and prevents the pipes from accidentally disengaging when axial loads are applied.

In an embodiment, the coupler comprises one or more coupling features and the first and second pipes comprise one or more complementary coupling features, wherein movement of the first and second pipes with respect to each other along the longitudinal direction of the tubular assembly is prevented by the one or more coupling features and complementary coupling features. The complementary coupling features can be provided along an outer circumferential surface of the first and second pipes. The one or more coupling features and complementary coupling features may for instance include an annular groove and an annular protrusion configured to be received in the annular groove. The coupling features may be present over the full circumference of the pipes and the coupler, or along only part of it.

In an embodiment, the coupler comprises a sleeve configured to be fastened around the outer end portions of the first and second pipe. The sleeve may comprise a plurality of sleeve parts that can be arranged around the outer circumferential surface of the first and second pipe and connected to each other using fasteners such as bolts, screws, nails or pins. The fasteners may be provided at a plurality of positions among the outer circumferential surface of the first and second pipe. Alternatively, the sleeve may be a single component. For example, in an embodiment the sleeve parts may comprise sleeve parts that are hingedly connected to each other on one end and can be fastened around the pipe outer potions around the other sleeve part end.

In an embodiment, the coupler is configured to extend circumferentially between the overlapping outer end portions of the first and second pipes. For example, the coupler may be a locking spigot which is provided between the overlapping outer end portions of the first and second pipes. In a particular embodiment, an annular channel is formed between the overlapping outer end portions of the first and second pipes, wherein the annular channel can be accessed externally to arrange a locking spigot within the annular channel. The locking spigot locks the first and second pipes together by preventing movement along at least the longitudinal direction.

In an embodiment, the consistent inner diameter is between 110 mm and 2000 mm, optionally between 160 mm and 500 mm. Currently, butt welding is typically used for pipes with a diameter between 110 mm and 2000 mm. The current coupler and tubular assembly are suited for application on pipe diameters in the same range. However, typically pipes are smaller, between 160 mm and 500 mm. Such dimensions make the assembly typically suited for the protection of power cables underground. Each pipe, before being connected to another pipe, typically has a length between 5 m and 30 m, optionally between 10 m and 24 m.

In an embodiment, the first and second pipe are made of polyethylene. Polyethylene is typically suited for the application of the tubular assembly for the protection of cables underground.

In an embodiment, the coupler is formed of a plastic material, preferably Polyoxymethylene (POM), Polyether ether ketone (PEEK), Polyvinyl chloride (PVC) or a fibre reinforced plastic material. Such a plastic coupler can securely couple the pipes and hold even when pipes are deformed under tensile forces.

In an embodiment, the first pipe and/or the second pipe comprise a welded pipe portion, wherein the outer end portion of the first pipe and/or the outer end portion of the second pipe is/are provided as part of the respective welded pipe portion. The welded pipe portions may be welded to the pipes already during manufacture. The time consuming welding process therefore does not need to be carried out on the installation site. Welding the end portions to a conventional pipe is easier than integrally forming a pipe with suitable outer end portions. Nevertheless, the latter is not excluded from the invention.

In an embodiment, the first pipe and second pipe are substantially identical. It will be understood that a tubular assembly according to the invention can comprise more than a single pair of pipes connected to each other using a coupler. Typically, a tubular assembly comprises a large number of pipes each having two outer ends, wherein each of the respective outer ends is coupled to an outer end of another pipe that is complementary in shape. Each pipe is therefore provided with two outer end portions wherein the first outer end portion is complementary in shape to the second outer end portion. In this way, a long tubular assembly may be constructed in situ, for each connection using first and second pipes that are substantially identical to each other.

According to another aspect of the invention, and in accordance with at least some of the advantages and effects described herein above, there is provided a pipe having two outer end portions wherein the first outer end portion is complementary in shape to the second outer end portion, wherein the pipe when coupled with its first outer end portion to the second outer end portion of an identical pipe, in a way that the outer end portions at least partially overlap along a longitudinal direction of the pipes, forms a continuous tubular body with a smooth inner circumferential wall having a substantially consistent inner diameter throughout. Alternatively, a pipe may be provided with two identical outer end portions which can be connected to pipes with complementary outer end portions.

According to another aspect of the invention, and in accordance with at least some of the advantages and effects described herein above, there is provided a kit comprising two pipe portions, each pipe portion having a first outer end which is substantially planar and suitable for welding to a pipe with a planar outer end, and a second outer end, wherein the second outer end of the first pipe portion and the second outer end of the second pipe portion are complementary in shape and configured to form a continuous tubular body with a smooth inner circumferential wall and a substantially consistent inner diameter throughout the tubular body. Such a kit may be used to convert a conventional pipe with for instance a planar outer end to a pipe having outer end portions according to the invention. The pipe portions may for instance be welded or glued to a conventional pipe.

According to another aspect of the invention, and in accordance with the advantages and effects described herein above, there is provided a combination comprising a first pipe, a second pipe, and a coupler configured to form a tubular assembly according to the invention.

According to another aspect of the invention, and in accordance with the advantages and effects described herein above, there is provided a coupler suitable for coupling two pipes to form a tubular assembly according to the invention.

In an embodiment, the coupler comprises two half cylinders, wherein each of the half cylinders comprises one or more features for interlocking the coupler with the first and/or second pipe to prevent movement along an axial direction of the first and/or second pipe.

According to another aspect of the invention, and in accordance with at least some of the advantages and effects described herein above, there is provided a method of forming a pipe for use in a tubular assembly for protecting cables underground. The method comprises providing a pipe with a substantially planar outer end; forming a pipe portion having two outer ends, the first outer end configured to be connected to the substantially planar outer end of the pipe and the second outer end provided with connective features for coupling to a pipe portion with complementary connective features; and connecting the pipe portion with its first outer end portion to the substantially planar outer end portion of the pipe.

In an embodiment the step of forming the pipe portion includes injection molding. An injection molding process provides the flexibility to form a pipe portion with the connective features with the required precision for the connective features to engage with the complementary connective features.

In an embodiment the step of connecting the pipe portion to the pipe includes welding, preferably a butt welding method, a spin welding method or an electro welding method. It will be understood that there may be other welding methods suitable to connect the pipe portions to the pipe in a way wherein leakage is prevented. Alternatively, the step of connecting the pipe portion to the pipe may also include gluing the pipe portion to the pipe, or any other conventional method for connecting the pipe portion to the pipe outer end.

In an embodiment the step of providing a pipe with a substantially planar outer end includes providing a pipe with two substantially planar outer ends, wherein two pipe portions are formed, and wherein the method comprises connecting both pipe portions to one of the substantially planar outer ends of the pipe.

### Brief Description of Drawings

Embodiments will now be described, by way of example only, with reference to the accompanying schematic drawings in which corresponding reference symbols indicate corresponding parts. In the drawings, like numerals designate like elements. Multiple instances of an element may each include separate letters appended to the reference number. For example, two instances of a particular element "20" may be labeled as "20a" and "20b". The reference number may be used without an appended letter (e.g. "20") to generally refer to an unspecified instance or to all instances of that element, while the reference number will include an appended letter (e.g. "20a") to refer to a specific instance of the element.
Figure 1a schematically shows a perspective view of a first embodiment of a tubular assembly.
Figure 1b presents a cross-sectional side view of the tubular assembly according to Fig, 1a.
Figure 2 shows an exploded view of the coupler in Figs. 1a and 1b.
Figure 3 shows a cross-sectional side view of a tubular assembly according to another embodiment.

The figures are meant for illustrative purposes only, and do not serve as restriction of the scope or the protection as laid down by the claims.

### Description of Embodiments

The following is a description of certain embodiments of the invention, given by way of example only and with reference to the figures.

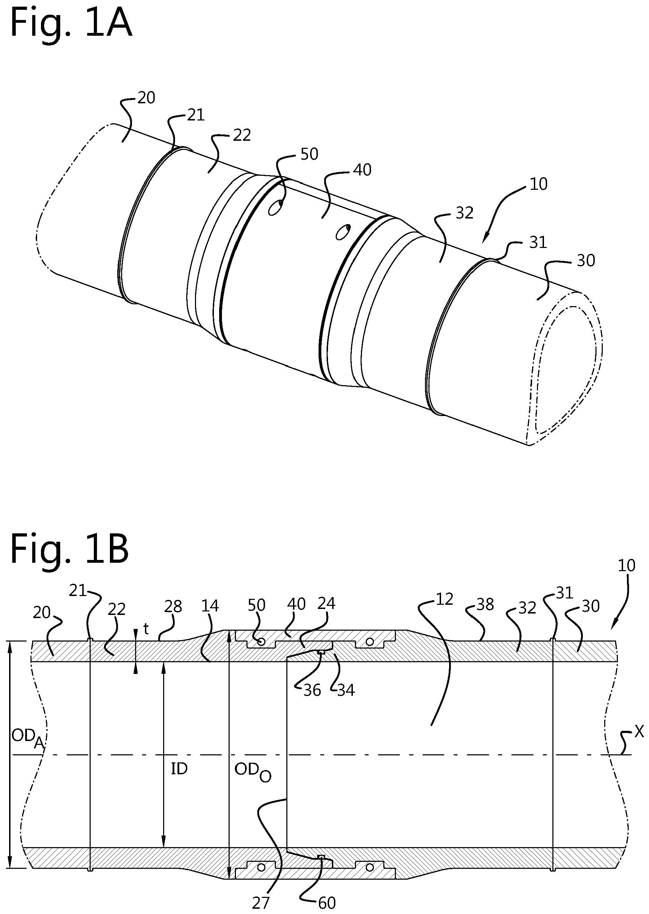

Figure 1A shows a perspective view of part of a tubular assembly 10, which can be used for protecting cables underground. The tubular assembly 10 includes a first pipe 20 having a pipe portion 22, a second pipe 30 having a pipe portion 32, and a coupler 40 fixed around the pipe portions 22,32 using bolts 50. The coupler 40 is provided around the pipe portions 22, 32 of the first and second pipes 20, 30 and secures a direct connection between the first pipe 20 and second pipe 30. The first and second pipes 20, 30 can be long, e.g., approximately 18 m, and therefore only part of the pipes 20, 30 has been shown. The pipes 20, 30 have a circular cross-section with a diameter of 200 mm.

The first and second pipes 20, 30 comprise a weld seam 21, 31 since the pipe portions 22, 32 have been welded to the first pipe 20 and second pipe 30, respectively, using a butt welding method. Such welding can already be performed during production of the pipes 20, 30 and therefore does not negatively influence the duration of the installation of the tubular assembly on the installation site. It will be understood that alternatives to connect the pipe portions 22,32 to the pipe 20,30 are also available and are not excluded from the invention. The skilled person will understand how to adjust the pipe ends and pipe portions to establish another type of connection as well.

Figure 1B shows a cross sectional view of the tubular assembly in Fig. 1A along the longitudinal direction. The welded pipe portion 22 of the first pipe 20 has an outer end portion 24. The welded pipe portion 32 of the second pipe 30 has an outer end portion 34 with a surface complementary in shape to the outer end portion 24 of the first pipe 20 and an annular chamber 36 that houses a seal 60.

The first pipe 20 has a consistent inner diameter ID everywhere apart from at its outer end portion 24. The outer end portion 24 is configured to mate with the outer end portion 34 of the second pipe 30. The outer end portion 34 has an outer circumferential surface that is partially complementary in shape to the inner circumferential surface of the outer end portion 24 of the first pipe 20.

The outer end portions 24, 34 overlap along the longitudinal direction X of the pipes 20, 30 to form a continuous tubular body 12 with a consistent inner diameter ID and a smooth inner circumferential wall 14 along the longitudinal direction. In this specific embodiment, the inner diameter D is approximately 200 mm, yet it will be understood that the design of the assembly 10 is scalable and can be adjusted for pipes having other diameters as well. The consistent inner diameter makes the tubular assembly 10 particularly suited for the application of protecting cables. The substantially smooth inner circumferential wall 14 with consistent inner diameter eliminates edges that could damage the cables during the pull-through. The transition 27 between the first pipe 20 and second pipe 30 along their inner circumference is at least as smooth as a transition between two welded pipes.

The annular chamber 36 is shaped as a recess in the outer end portion 34 of the second pipe 30 and provided between the overlapping outer end portions 24, 34. The seal 60 provided in the annular chamber 36 is an o-ring, which prevents dirt from entering into the tubular body 12. In addition, the seal 60 prevents cooling liquid that can be arranged within the tubular body 12 from leaking away.

The outer diameter ODo in part of the pipe portion 22 of the first pipe 20 is increased with respect to the average outer diameter OD_{A}, wherein the average outer diameter is defined as the constant outer diameter at an intermediate pipe cross section away from the outer end 24. Similarly, the outer diameter in part of the pipe portion 32 of this second pipe 30 is increased with respect to the average outer diameter of the second pipe 30. The local increment of the outer diameter ensures that the outer ends of the pipes 20, 30 have sufficient strength and stiffness.

The first pipe 20 has a wall thickness t of 20 mm. The outer diameter ODo of the first pipe 20 is increased with approximately 60% of the wall thickness t of the first pipe 20 as measured at an intermediate pipe cross section far away from the outer end portion 24. The same applies to the second pipe 30. Advantageously, the dimensions of the first and second pipes 20,30 are not significantly increased by the outer end portions 24,34. This is convenient during transportation of the pipes 20,30 to the installation site, as the pipes 20,30 do not require much more space than ordinary pipes with a constant outer diameter. Moreover, such a relatively slender assembly 10 enables installation of the pipes using a cable plough machine.

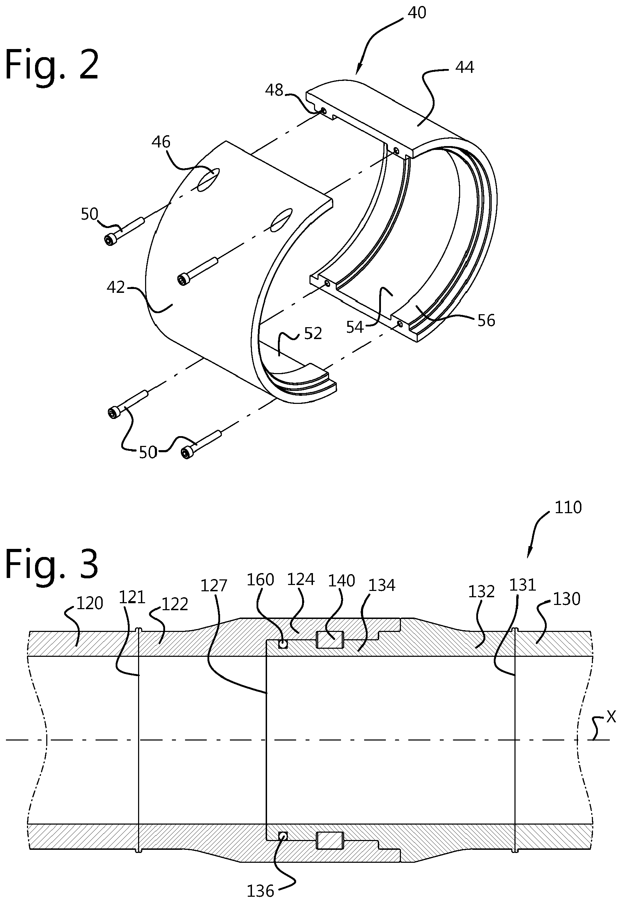

Fig. 2 shows an exploded view of the coupler 40 with bolts 50. The first pipe 20 and second pipe 30 are secured to each other using the coupler 40. The coupler 40 comprises two half cylinders 42, 44 configured to together form a sleeve around the end portions 24, 34 of the pipes 20, 30. The first half cylinder 42 has openings 46 in an outer circumferential surface for entering bolts 50, which can extend into bolt receptacles 48 in the second half cylinder 44. The bolts 50 are provided through the respective bolt openings 46 and receptacles 48 to secure the sleeve. Advantageous to such a connection is that it can be provided quickly. In addition, the pipes 20,30 are also easily decoupled if needed, and in a way that allows for reuse and/or recycling of the components.

The coupler 40 is configured to extend circumferentially along an outer circumferential surface 28, 38 of the first and second pipes 20, 30. The half cylinders 42, 44 are provided with an annular protrusion 56 that extends along an inner circumferential surface 52, 54 of the half cylinders 42, 44. The annular protrusions 56 extend along the entire circumference and are approximately 30 mm wide and 6 mm tall. The protrusions are shaped complementary to an annular recess in the outer circumferential surface 28, 38 of the pipes 20, 30. Providing the coupler 40 around the pipe portions 22, 32 therefore prevents movement of the first pipe 20 with respect to the second pipe 30 along the longitudinal axis X.

The first and second pipes are made of Polyethylene (PE). The coupler 40 is formed of Polyvinylchloride (PVC). These materials provide the tubular assembly 10 with the required strength.

Figure 3 shows a cross-sectional side view of a tubular assembly 110 according to another embodiment. Features of the tubular assembly 110 that have already been described above with reference to the first embodiment may also be present in the embodiment shown in figures 3 and will not all be discussed here again. For the discussion with reference to figure 3, like features are designated with similar reference numerals preceded by 100, to distinguish the embodiments.

In this embodiment, outer end portions 124,134 are each provided with a recess to together define an annular channel 129 that is configured to house the coupler 140. In this embodiment, the coupler 40 is a locking spigot. The annular channel 129 has an opening (not shown) that is accessible from outside of the assembly 110. The locking spigot can be entered through the opening to extend through the annular channel 129. The presence of the locking spigot prevents movement along at least the longitudinal axis X, thereby locking the first pipe 120 and second pipe 130 together. A rubber seal 160 is arranged in a separate annular chamber 136 to provide a leak-free connection between the two pipes 120, 130 that form the tubular body 112. The inner diameter of the tubular body 112 is consistent throughout the whole assembly and identical to the inner diameter of the first pipe 120 and second pipe 130. Again the transition 127 between the first pipe 120 and second pipe 130 along their inner circumference is at least as smooth as a transition between two welded pipes.

In the foregoing description of the figures, the invention has been described with reference to specific embodiments thereof. It will, however, be evident that various modifications and changes may be made thereto without departing from the scope of the invention as summarized in the attached claims. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims. In particular, combinations of specific features of various aspects of the invention may be made. An aspect of the invention may be further advantageously enhanced by adding a feature that was described in relation to another aspect of the invention.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. A tubular assembly for protecting cables underground, the tubular assembly comprising:
a first pipe having an outer end portion and defining a longitudinal direction along the main axis of the pipe;
a second pipe having an outer end portion,
wherein the outer end portion of the first pipe and the outer end portion of the second pipe at least partially overlap along the longitudinal direction to form a continuous tubular body with a smooth inner circumferential wall having a substantially consistent inner diameter throughout; the assembly further comprising
a coupler provided to secure the first and second pipe together.

2. The tubular assembly according to claim 1, wherein the outer end portions of the first and second pipe are substantially complementary in shape to each other.

3. The tubular assembly according to claim 1 or 2, wherein an annular chamber is provided between the overlapping outer end portions.

4. The assembly according to any of the preceding claims wherein the connection between the first pipe and the second pipe is waterproof.

5. The assembly according to any of the preceding claims further comprising a seal.

6. The tubular assembly according to any of the preceding claims, wherein the outer diameter of the first pipe and/or the second pipe is increased with respect to the average outer diameter of the first and/or the second pipe respectively.

7. The tubular assembly according to claim 6 wherein the outer diameter of the first and/or second pipe is increased with a value equal to or less than the average wall thickness of the first and/or the second pipe respectively.

8. The tubular assembly according to any of the preceding claims, wherein the tubular assembly has a substantially smooth outer circumferential surface.

9. The tubular assembly according to any of the preceding claims, wherein the coupler is configured to extend circumferentially along an outer circumferential surface of the first and second pipes.

10. The tubular assembly according to any of the preceding claim, further comprising an interlocking mechanism that prevents movement of the first and second pipes with respect to each other along the longitudinal direction.

11. The tubular assembly according to any of the preceding claims, wherein the coupler comprises one or more coupling features and wherein the first and second pipes comprise one or more complementary coupling features, wherein movement of the first and second pipes with respect to each other along the longitudinal direction of the tubular assembly is prevented by the one or more coupling features and complementary coupling features.

12. The tubular assembly according to any of the preceding claims, wherein the coupler comprises a sleeve configured to be fastened around the outer end portions of the first and second pipe.

13. The tubular assembly according to any of claims 1-8 wherein the coupler is configured to extend circumferentially between the overlapping outer end portions of the first and second pipes.

14. The assembly according to any of the preceding claims wherein the consistent inner diameter is between 110 mm and 500 mm, preferably between 160 mm and 250 mm.

15. The assembly according to any of the preceding claims, wherein the first and second pipe are made of polyethylene.

16. The assembly according to any of the preceding claims, wherein the coupler is formed of a plastic material, preferably Polyoxymethylene (POM), Polyether ether ketone (PEEK), Polyvinyl chloride (PVC) or a fibre reinforced plastic material.

17. The tubular assembly according to any of the preceding claims wherein the first pipe and/or the second pipe comprises a welded pipe portion and wherein the outer end portion of the first pipe and/or the outer end portion of the second pipe is/are provided as part of the respective welded pipe portion.

18. The tubular assembly according to any of the preceding claims wherein the first pipe and second pipe are substantially identical.

19. A pipe having two outer end portions wherein the first outer end portion is complementary in shape to the second outer end portion, wherein the pipe when coupled with its first outer end portion to the second outer end portion of an identical pipe, in a way that the outer end portions at least partially overlap along a longitudinal direction of the pipes, forms a continuous tubular body with a smooth inner circumferential wall having a substantially consistent inner diameter throughout.

20. A kit comprising two pipe portions, each pipe portion having a first outer end which is substantially planar and suitable for welding to a pipe with a planar outer end, and a second outer end, wherein the second outer end of the first pipe portion and the second outer end of the second pipe portion are complementary in shape and configured to form a continuous tubular body with a smooth inner circumferential wall and a substantially consistent inner diameter throughout the tubular body.

21. A combination comprising a first pipe, a second pipe, and a coupler configured to form a tubular assembly according to any of claims 1-18.

22. A coupler suitable for coupling two pipes to form a tubular assembly according to any of claims 1-18.

23. A method of forming a pipe for use in a tubular assembly for protecting cables underground, the method comprising:
providing a pipe with a substantially planar outer end;
forming a pipe portion having two outer ends, the first outer end configured to be connected to the substantially planar outer end of the pipe and the second outer end provided with connective features for coupling to a pipe portion with complementary connective features;
connecting the pipe portion with its first outer end portion to the substantially planar outer end portion of the pipe.

24. The method of claim 23, wherein the step of forming the pipe portion includes injection moulding.

25. The method of claim 23 or 24, wherein the step of connecting the pipe portion includes welding, preferably a butt welding method, a spin welding method or an electro welding method.

26. The method of any of claims 23-25, wherein the step of providing a pipe with a substantially planar outer end portion includes providing a pipe with two substantially planar outer end portion, wherein two pipe portions are formed, and wherein the method comprises connecting both pipe portions to one of the substantially planar outer ends of the pipe.
